(19) Europäisches Patentamt

European Patent Office

Office européen des brevets

(11) **EP 0 672 994 B1**

(12) **EUROPEAN PATENT SPECIFICATION**

(45) Date of publication and mention
of the grant of the patent:
**26.07.2000 Bulletin 2000/30**

(51) Int. Cl.⁷: **G06K 7/14**

(21) Application number: **95103511.2**

(22) Date of filing: **10.03.1995**

(54) **Method and apparatus for reading an optically two-dimensional code**

Verfahren und Vorrichtung zum Lesen eines optischen zweidimensionalen Kodes

Méthode et appareil pour lire un code optique à deux dimensions

(84) Designated Contracting States:
**DE FR GB**

(30) Priority: **14.03.1994 JP 4258794**

(43) Date of publication of application:
**20.09.1995 Bulletin 1995/38**

(73) Proprietor: **DENSO CORPORATION**
**Kariya-City, Aichi-Pref. (JP)**

(72) Inventors:
• **Hara, Masahiro**
**Nagoya (JP)**
• **Watabe, Motoaki**
**Tokokawa-shi, Aichi-ken (JP)**
• **Nojiri, Tadao**
**Oobu-shi, Aichi-ken (JP)**
• **Nagaya, Takayuki**
**Nagoya (JP)**
• **Uchiyama, Yuji,**
**41-3-104 Aza Yokomichi**
**Aichi-gun, Aichi-ken (JP)**

(74) Representative:
**Winter, Brandl, Fürniss, Hübner, Röss,**
**Kaiser, Polte**
**Partnerschaft**
**Patent- und Rechtsanwaltskanzlei**
**Alois-Steinecker-Strasse 22**
**85354 Freising (DE)**

(56) References cited:

| | |
|---|---|
| EP-A- 0 561 334 | EP-A- 0 564 708 |
| WO-A-93/01566 | US-A- 4 924 078 |
| US-A- 5 053 609 | US-A- 5 126 542 |
| US-A- 5 189 292 | US-A- 5 202 552 |

**Description**

BACKGROUND OF THE INVENTION

1. Field of the Invention:

This invention relates to an optically readable code for inputting information into a computer or the like, and more particularly to an optically readable two-dimensional code including cells representing binary-coded data and placed on a two-dimensional matrix so as to form a binary-coded pattern.

2. Related Art:

A generally known method of reading a two-dimensional code includes steps of taking in an image of the two-dimensional code by means of an image input device, such as a TV camera, and then detecting the position of the concerned two-dimensional code to read out content of the code. Subsequently, the size of the code matrix is obtained based upon the two-dimensional code thus read out, and the coordinates of data cells in the code matrix are successively obtained. Then, a judgement is made as to whether each data cell is "0" or "1" (i.e. light or dark), thus converting each of the data cells into character information.

Such a two-dimensional code is generally advantageous, when it is compared with a bar code, in that a large amount of information can be stored in a relatively smaller area.

To realize high accuracy in the reading operation of such two-dimensional codes, conventional technologies have been adopting encoding theories using various encoding technologies, such as an error detecting encoding operation and an error-correcting encoding operation. However, it should be pointed out that the present-day advancement of the reading operation of this kind of two-dimensional codes is still in a level that it must rely on a software processing executed by a high-performance CPU as described later. Thus, there is room to be improved from the view point of how fast the two-dimensional codes are read.

One of the causes is that the two-dimensional code itself has a code arrangement unsuitable for fast reading operation. In addition, this code arrangement is not suitable for the processing required to handle the rotation of the two-dimensional code.

For example, the Japanese patent application No. 12579/1990, which is a counterpart application of the United States Patent 4,939,354, discloses a matrix having two solid sides consisting of consecutively arrayed dark (black) squares only and another two dotted sides consisting of alternately arrayed light (white) and dark squares. A detection is made to discriminate each of these four sides based on their characteristic line profile, then determining an orientation of the matrix. However, in the determination of the position and its rotational angle, this matrix requires us to scan its image so extensively from every direction that all the characteristic patterns of these four sides are completely recognized.

Furthermore, an image of the matrix is not always constant in size, thus it may cause an error in the detection of cell in the case that the position of cell is predicted by a predetermined interval. Still further, when the light squares or dark squares are arrayed so consecutively and extensively, some of reading methods will possibly result in an erroneous detection. According to the United States Patent 4,939,354, there are disclosed two dotted sides consisting of alternately arrayed light and dark squares. Therefore, all thing need to be done else is solely determining the orientation of the code matrix, thus letting us accurately predict the positions of all the cells based upon the positions of light and dark squares of these two dotted sides, and also assuring an accurate reading operation. However, using so large amount of cells for only determining the position of each cell is not desirable since the number of the remaining cells available in the matrix for representing other information is reduced correspondingly.

Moreover, the matrix disclosed in the United States Patent 4,939,354 uses a series of linearly arrayed binary-coded cells for representing one character. Such a cell arrangement is disadvantageous in that there is the possibility that numerous data become unreadable due to the presence of a stain (spot or void).

Furthermore, there is a possibility that exactly the same pattern as that of the characteristic four peripheral sides may happen to be produced within the data area. It will necessitate a complicated processing for the reading operation. And, accordingly, such a complicated reading operation will require a significantly long time to complete.

In general, compared with the bar codes, the two-dimensional codes allow us to deal with a large amount of data. It means that the two-dimensional codes require a fairly long time in the decoding operation of the data. In addition, as suggested in the above-described problem, another long time is required in a reading-out operation for picking up two-dimensional codes only from the image data taken in. Yet further, one of other factors taking a time is a decode preprocessing including a rotational angle detection and a coordinate conversion processing which are mandatory when each two-dimensional code is randomly placed with an uncertain rotational angle with respect to a reading device. Still further, the two-dimensional codes themselves are inherently weak against stain due to the nature of storing numerous information in a form of a two-dimensional pattern within a relatively small area.

Further information relating to the prior art can be found in WO-A-93 01566 relating to a system and method for acquiring an optical target, wherein an optical target is acquired by an optical scanning system according to an in-band target frequency in an input signal from an optical scanning device. Both the in-band energy level and the out-of-band energy level of the input signal from the optical scanning device are determined. These two energy levels are compared and a possible detection of the target is determines according to this comparison. Said document also discusses the use of a concentric ring acquisition target with an optically readable label. A concentric ring acquisition target is formed of a center circle and a plurality of concentric rings and may be acquired by the optical scanning system. It is further taught therein that acquisition targets are preferably disposed at the center of an optically readable label.

## SUMMARY OF THE INVENTION

Accordingly, in view of above-described problems encountered in the related art, a principal object of the present invention is to provide a novel two-dimensional code capable of assuring an excellent accuracy in the reading operation and bringing an excellent data ratio (i.e. a ratio of a data area to the whole code area).

In order to accomplish this and other related objects, the present invention defines a two-dimensional code as recited as claim 1 as well as the affiliated two-dimensional code reading apparatus of claim 7 and the two-dimensional code reading method of claim 10. Further embodiments of the invention are defined in the dependent claims. The present invention provides a two-dimensional code comprising: cells each representing a binary-coded data; the cells being placed on a two-dimensional matrix as a pattern that is readable by a scanning operation along a predetermined scanning line; and at least two positioning symbols disposed at predetermined positions in the matrix, each of the positioning symbols having a pattern capable of producing a waveform having an identical element width ratio irrespective of the orientation of the scanning line when the scanning line passes through the center of each positioning symbol.

In the above two-dimensional code, it is preferable that the predetermined positions are apexes of the two-dimensional matrix, or each positioning symbol has a pattern including concentric similar figures of decreasing size overlapped successively, or there are provided a series of timing cells including alternate light and dark cells, said series having an inclination of 1/1, i.e. 45°, in the two-dimensional matrix. The binary-coded data may include a plurality of characters, and each of the characters is represented by a group of cells disposed in a two-dimensional region of the two-dimensional matrix. Furthermore, an apex detecting cell is disposed on an apex of the matrix where no positioning symbol is disposed.

A second aspect of the present invention provides a two-dimensional code reading apparatus for optically reading the aforementioned two-dimensional code, the reading apparatus comprising: an image pickup device taking an image of the two-dimensional code, then converting the image into image signals pixel by pixel in response to light intensity of the image, and successively outputting resultant image signals; and a decoder unit decoding the resultant image signals into binary-coded signals; wherein the decoder unit comprises: binary-encoding means for binary encoding the image signals in accordance with a level of each signal, and outputting binary-coded signals successively; memory means for storing the binary-coded signals as image data in accordance with a position of a pixel where the image was taken; symbol detecting means for detecting the specific pattern corresponding to each of the positioning symbols based on the binary-coded signals and detecting the coordinates of each of the symbols from the image data stored in the memory means based on the detected specific pattern; matrix position determining means for finalizing a contour and an orientation of the two-dimensional matrix based on the coordinates of the symbols detected by said symbol detecting means, thereby identifying all the coordinates of the binary-coded cells placed on the two-dimensional matrix; and reading means for reading out the image data stored in the memory means in accordance with the finalized contour and orientation of the two-dimensional matrix.

In the above two-dimensional code reading apparatus it is preferable that the two-dimensional code comprises a series of timing cells including alternate light and dark cells arranged in the matrix, optically readable by the image pickup device; and the decoder unit further comprises timing cell detecting means for detecting coordinates of each timing cell from the image data stored in the memory means in accordance with the coordinates of the symbols obtained by the symbol detecting means, the timing cells determining the density of the image data in accordance with the intervals of the timing cells.

The two-dimensional code is created by performing an exclusive-OR operation cell by cell between a predetermined provisional two-dimensional code and a two-dimensional cell-feature-conversion code which includes a specific conversion pattern represented by light and dark cells corresponding to the data region of the provisional two-dimensional code; and the reading means restores the information of the provisional two-dimensional code by performing an exclusive-OR operation cell by cell between the two-dimensional image data obtained from the image pickup means and two-dimensional image data of the two-dimensional cell-feature-conversion code stored in the memory means.

A third aspect of the present invention provides a two-dimensional code reading method for optically reading the aforementioned two-dimensional code, comprising steps of: taking an image of the two-dimensional code by an image pickup device, then converting the image into image signals pixel by pixel in response to light intensity of the image, and binary encoding the image signals in accordance with a level of each signal, then storing thus binary-coded signals as image data in a memory means in accordance with a position of a pixel where the image was taken; detecting the specific pattern corresponding to each of the positioning symbols based on the binary-coded signals, as a parallel processing to the step of storing the binary-coded signals in the memory means; detecting coordinates of each of the symbols from the image data stored in the memory means based on the detection of the specific pattern; finalizing a contour and an orientation of the two-dimensional matrix based on the coordinates of the symbols, thereby identifying all the coordinates of the binary-coded cells placed on the two-dimensional matrix; and reading out the image data stored in the memory means in accordance with the finalized contour and orientation of the two-dimensional matrix.

According to the present invention, the aforementioned two-dimensional code may comprise data cells that are processed by predetermined conversion processing into a characteristic pattern different from the pattern of the positioning symbols.

According to the present invention, at least two positioning symbols are disposed at predetermined positions in the matrix. Each of the positioning symbols has a pattern capable of inducing the same element width ratio irrespective of orientation of a scanning line when the scanning line passes through the center of each positioning symbol. Accordingly, this positioning symbol enables us to surely obtain the same characteristic element width ratio irrespective of the orientation of a scanning line. It is, hence, not necessary to repeat the scanning operation extensively changing its scanning angle. Thus, in the scanning operation of the code matrix, at least two predetermined positions are quickly and easily detected. Once the positions of the predetermined two positions are detected in the code matrix, the position and a rotational angle of the whole matrix is easily calculated based on the distance and angle between them.

The predetermined positions can be apexes (i.e. corners) of the matrix. In case of apexes of the matrix, they will be immediately found in the scanning search, and it will be easy to obtain the contour of the two-dimensional code. Furthermore, it is advantageous that the apexes are seldom disturbed by other code patterns when they are searched.

The positioning symbols are disposed at at least two corners of the matrix, and each of the positioning symbol is a pattern including concentric similar figures of decreasing size overlapped successively.

It should be understood that the pattern capable of gaining the same frequency component ratio is a light-and-dark pattern which shows the consistent similarity no matter which direction the scanning angle is when the scanning line passes through the center of the pattern. For example, such a pattern will include the concentric similar figures overlapped successively. More specifically, one typical pattern consists of a large square of dark cells, a middle square of light cells concentric with but smaller in size than the large square, and a small square of dark cells concentric with but smaller in size than the middle square. The figures are not limited to squares only; for example, circles, hexagons and other various figures, especially regular polygons, circles and ellipses can be preferably used. However, in view of the fact that the most popular shape of the matrix is a square, the most preferable positioning symbol would be a square or a rectangle since its shape fits the matrix and loss of space can be suppressed at a minimum level. Particularly, a square is most preferable since it assures a least loss.

According to the present invention, the two-dimensional code may include a series of timing cells including alternate light and dark cells, said series having an inclination of 1/1, i.e. 45°, in the matrix.

Arraying light and dark cells in an alternating manner is advantageous in that the position of each cell unit is easily detected compared with the arrangement of consecutively arrayed light (white) or dark (black) cells. However, if the arrangement of the alternately arrayed light and dark cells (hereinafter referred to as an alternating light-and-dark cells) is parallel to the side according to the related art, such alternating light-and-dark cells must stretch along at least two directions i.e. in both a vertical direction and a lateral direction, to cover the positions of all the cells involved in the matrix. However, for a square matrix being one example of the present invention, the line of such an alternating light-and-dark cells is disposed with an inclination of 1/1, i.e 45°, from an apex. In this case, the number of cells constituting the alternating light-and-dark cells is as small as the number of cells constituting one side of the square matrix. Thus, the remaining cells can be effectively used for a space available for other useful information.

Of course, it is preferable that the line of the alternating light-and-dark cells is disposed diagonally from an apex in view of easiness in the search of positions of the alternating light-and-dark cells. However, it is needless to say that the same can be disposed from an intermediate point of a side instead of the apex. In such a case, the matrix will include a plurality of 1/1, i.e 45°, inclined lines of alternating light-and-dark cells.

For a matrix other than a square, a 1/1 i.e 45°, inclined line of alternating light-and-dark cells starting from one apex cannot connect diagonally disposed two apexes. It means that such a 1/1, i.e 45°, inclined line cannot cover all the cells. But, such a problem will be solved by providing another 1/1, i.e 45°, inclined line of alternating light-and-dark cells starting from the other apex. In the event that the problem is not yet solved, it will be effective to provide still another 1/1, i.e 45°, inclined line of alternating light-and-dark cells starting from an appropriate intermediate portion of a side. Even in such a case, it is possible to gain a larger space available for other information than that of the related art arrangement of arraying alternating light-and-dark cells along both the vertical and lateral sides.

A group of cells representing a character in the data region can be summarized in a two-dimensional pattern. This two-dimensional arrangement is useful in that the number of characters becoming unreadable due to the presence of stain having a predetermined area is minimized since the two-dimensional arrangement is advantageous to reduce the affection of stain and, therefore, the number of character spoiled can be reduced. The two-dimensional arrangement will be, for example, embodied as a square or a rectangular pattern. In the case that the cell number of one character unit does not fit to a square or a rectangle, it will be possible to combine two characters to form a square or a rectangle.

The two-dimensional code can be processed by a predetermined conversion processing into a desirable pattern, instead of directly placing it on the matrix. For example, in the two-dimensional code, a pattern of the data region can be differentiated from that of the non-data region. The non-data region includes the above-described positioning symbols and the 1/1, i.e 45°, inclined alternating light-and-dark cells whose characteristic patterns must be detected in the beginning of the scanning operation. Thus, it is important for the conversion processing to eliminate like patterns existing in the data region.

For example, there is provided a conversion matrix of the same size as the data region in which a predetermined pattern for conversion is formed. Then, the data region is converted into a different pattern by taking an exclusive-OR with this pattern. Only one predetermined pattern will not always promise that the data region is surely converted into a desirable pattern. It is thus recommendable to prepare a plurality of predetermined patterns beforehand, so that the same number of different patterns are produced by converting the data region by each of these patterns. Then, the preferable pattern is selected among them by finding out the one most different from the non-data region.

Moreover, it is desirable that there is provided an apex detecting cell which is disposed on an apex of the matrix where none of the positioning symbols is disposed.

BRIEF DESCRIPTION OF THE DRAWINGS

The above and other objects, features and advantages of the present invention will become more apparent from the following detailed description which is to be read in conjunction with the accompanying drawings, in which:

Fig. 1 is a view illustrating one example of a two-dimensional code in accordance with the present invention;

Figs. 2A and 2B are views illustrating the frequency characteristics of the positioning symbols in accordance with the present invention;

Figs. 3A-3C are views illustrating placement and processing of the positioning symbols in accordance with the present invention;

Figs. 4A and 4B are views illustrating placement of timing cells in accordance with the present invention;

Fig. 5 is a view showing allocation of characters in accordance with the present invention;

Figs. 6A-6C are views comparatively illustrating affection of stain between the present invention and the related art;

Figs. 7A-7C are views showing characteristics of a conventional binary-encoding circuit;

Fig. 8 is a view illustrating a pattern conversion processing for differentiating the data region from the non-data region in accordance with the present invention;

Figs. 9A and 9B are views showing dummy lines provided around the two-dimensional code in accordance with the present invention;

Fig. 10 is a view showing another example of the two-dimensional code in accordance with the present invention;

Figs. 11A-11C are views showing various modifications of the positioning symbols in accordance with the present invention;

Figs. 12A and 12B are views illustrating various modifications of placement of the character cell groups combined with each other in accordance with the present invention;

Fig. 13 is a view showing another embodiment of the two-dimensional code in accordance with the present invention, which is characterized by a rectangle shape;

Fig. 14 is a flow chart showing a series of processes ranging from the encoding operation of the two-dimensional code to the printing operation in accordance with the present invention;

Fig. 15 is a flow chart showing a reading operation of the two-dimensional code in accordance with the present invention;

Fig. 16 is a flow chart showing the remainder of the reading operation of the above two-dimensional code in accordance with the present invention;

Fig. 17 is a view showing an arrangement of a reading device in accordance with the present invention;

Fig. 18 is a view showing a typical placement of conventional timing cells; and

Fig. 19 is a view illustrating an invalidation processing of a conventional bar code.

## DETAILED DESCRIPTION OF THE PREFERRED EMBODIMENTS

Preferred embodiments of the optically readable two-dimensional code, the related method and apparatus using the same in accordance with the present invention will be explained in greater detail hereinafter, with reference to the accompanying drawings. Identical parts are denoted by identical reference number throughout views.

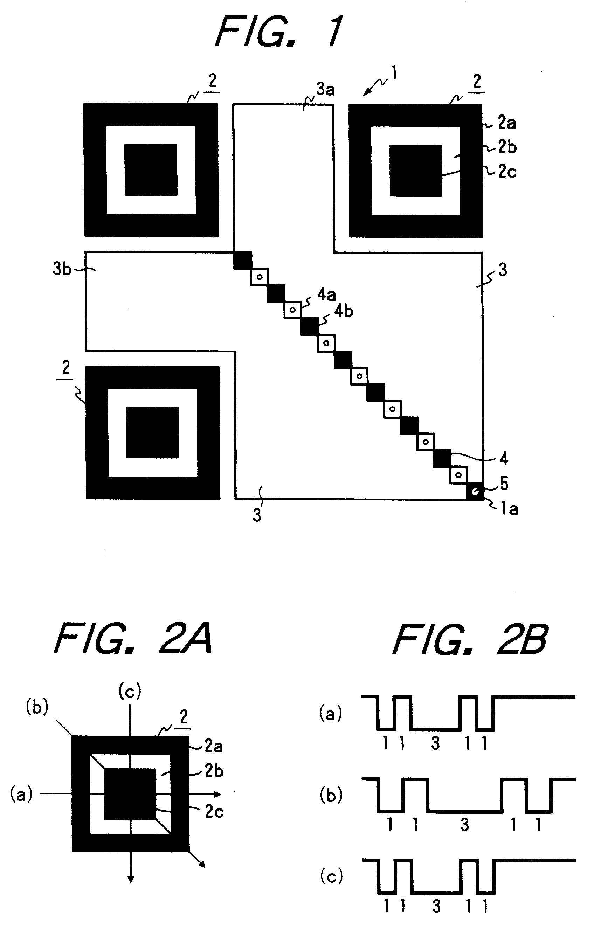

Fig. 1 shows one embodiment of a two-dimensional code 1 in accordance with the present invention. This two-dimensional code 1 is a square having four apexes at its corners and comprises three isolated positioning symbols 2,2,2 placed at three corners of the two-dimensional code 1, a data region 3, a series of timing cells 4 diagonally extending in the data region 3, and an apex detecting cell 5 located at the remaining corner of the two-dimensional code 1. This two-dimensional code 1, a square code, is constituted by the same number of vertical and lateral cells (21 cells x 21 cells). Each cell is the one selected from optically discriminable two kinds of cells, which are white (light) and black (dark) cells in the drawings and explanation in this embodiment. The timing cells 4 correspond to 1/1 inclined alternating light-and-dark cells. The apex detecting cell 5 acts as one of timing cells 4. Fig. 1 shows a blank condition where no data is described in the data region 3.

The positioning symbols 2,2,2 are disposed at three of four corners of the two-dimensional code 1. The light and dark arrangement of cells in each positioning symbol 2 is characterized by a pattern consisting of a large square 2a of black cells, a middle square 2b of white cells concentric with but smaller in size than the large square 2a, and a small square 2c of black cells concentric with but smaller in size than the middle square 2b.

Fig. 2 shows the scanning operation of this positioning symbol 2 and resultant light and dark signals. Fig. 2A shows representative three straight scanning lines (a),(b) and (c), each passing through the center of the positioning symbol with a distinctive angle. Fig. 2B shows signal waveforms corresponding to the light and dark patterns detectable along each of the scanning lines (a), (b) and (c), each frequency component ratio of which is identical with each other. More specifically, the frequency component ratio obtainable from each of the scanning lines (a), (b) and (c) passing through the center of the positioning symbol 2 is as follows:

dark : light : dark : light : dark = 1 : 1 : 3 : 1 : 1

It is needless to say that the same frequency component ratio is obtainable from any straight scanning line having an intermediate angle between the scanning lines (a), (b) and (c).

From this, it is known that the characteristic frequency component ratio of the positioning symbol 2 is easily detectable by executing only one scanning operation in a predetermined direction. In other words, it is not necessary to repeatedly execute the scanning operation by changing the angle of the straight scanning line until the predesignated pattern is detected. Accordingly, the central position of the positioning symbol 2 can be easily and quickly found. Thus, the position of the two-dimensional code 1 is promptly identified, and the succeeding processing can be started immediately.

As the positioning symbol can be identified by only one scanning operation, it is no longer necessary to repeatedly change the angle of scan for making a judgement of whether the image taken from an image pickup device such as a TV camera includes various noises other than the two-dimensional code 1. Hence, the position of the two-dimensional code 1 is immediately recognized. In addition, all the necessary things to do after that is only to search the vicinity of thus found positioning symbol 2. Therefore, the code in the data region is speedily read out. Moreover, the means for detecting the specific frequency component ratio fits the hardware processing, which is executable in parallel with the image take-in processing by means of the TV camera etc. It means that the speed of reading out the code can be further increased.

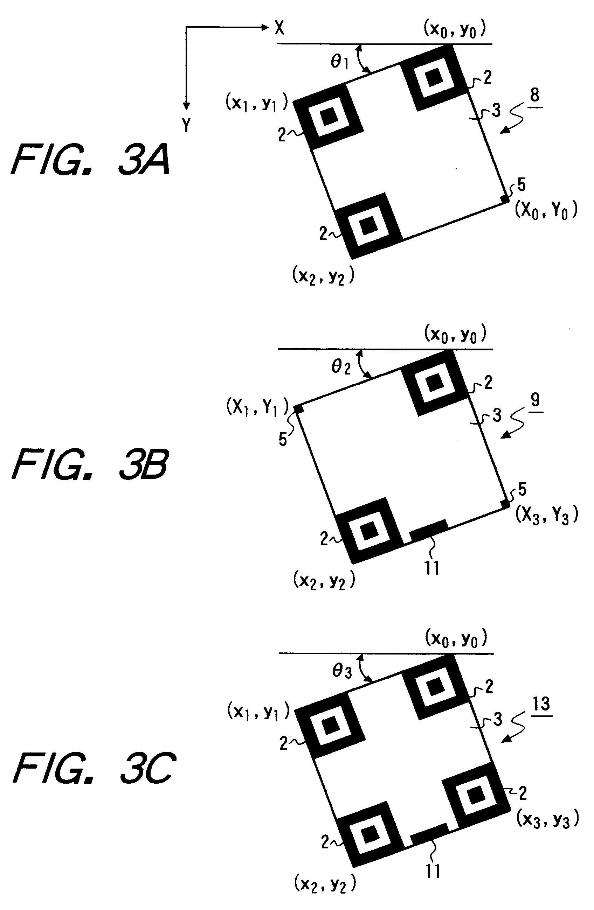

Next explained with reference to Fig. 3 is a simple method of obtaining the contour of the two-dimensional code, realized by providing more than two positioning symbols 2 at corners of the code.

Fig. 3A shows one example of a two-dimensional code 8 whose three corners are respectively provided a positioning symbol 2. If the central position of each of three positioning symbols 2, 2, 2 is found, it is possible to calculate the coordinates of three apexes of the two-dimensional code 8 based on the coordinates of the centers of the positioning symbols. Assuming that $(x_0, y_0)$, $(x_1, y_1)$ and $(x_2, y_2)$ represent the coordinates of the three apexes, the following equations 1 and 2 will obtain the coordinates $(X_0, Y_0)$ of the remaining apex. Thus, the contour of the two-dimensional code 8 is recognized. Furthermore, the following equation 3 will obtain an inclination $\theta_1$ of the two-dimensional code 8.

$$X_0 = x_0 + (x_2 - x_1) \qquad (1)$$

$$Y_0 = y_0 + (y_2 - y_1) \qquad (2)$$

$$\theta_1 = \tan^{-1} \frac{y_0 - y_1}{x_0 - x_1} \qquad (3)$$

Needless to say, it is possible to directly obtain the coordinates $(X_0, Y_0)$ of the remaining apex based on the coordinates representing the centers of three positioning symbols 2, 2 and 2.

Furthermore, as shown in Fig. 3A, it is preferable to provide an apex detecting cell 5 on an apex where the positioning symbol 2 is not disposed. In this case, the search will be conducted in the vicinity of the apex $(X_0, Y_0)$ obtained from the equations 1 and 2, to find out the apex detecting cell 5. By regarding the coordinates of the apex detecting cell 5 thus obtained as accurate apex coordinates $(X_0, Y_0)$, the contour of the two-dimensional code is precisely obtained even if the two-dimensional code is unwantedly distorted. Needless to say, such an apex detecting cell 5 can be omitted if no distortion is expected.

Fig. 3B shows an another two-dimensional code 9 in accordance with the present invention, which is characterized by two positioning symbols 2, 2 disposed at diagonal two corners of the two-dimensional code 9, whereas the two-dimensional code 8 of Fig. 3A includes three positioning symbols 2--2 disposed at three corners thereof. It will be preferable to additionally provide the apex detecting cell 5 in case of presence of distortion. The contour and an inclination $\theta_2$ of the two-dimensional code 9 are obtained from the following equations 4-8. A merit brought by this example is that the data ratio is increased. However, an orientation determining symbol 11 will be additionally required to determine the actual rotational position of the two-dimensional code 9.

$$X_1 = \frac{x_0 + x_2 - y_2 + y_0}{2} \qquad (4)$$

$$Y_1 = \frac{y_0 + y_2 - x_0 + x_2}{2} \qquad (5)$$

$$X_3 = \frac{x_0 + x_2 - y_0 + y_2}{2} \qquad (6)$$

$$Y_3 = \frac{y_0 + y_2 - x_2 + x_0}{2} \qquad (7)$$

$$\theta_2 = \tan^{-1} \frac{y_0 - x_2 - y_2 + x_0}{x_0 - y_0 - x_2 + y_2} \qquad (8)$$

Fig. 3C shows a two-dimensional code 13 in accordance with the present invention, which includes positioning symbols 2 disposed every corners of the two-dimensional code 13. This example is advantageous in that the contour of two dimensional code 13 is directly obtained even if the two-dimensional code 13 includes a significant distortion. An inclination $\theta_3$ is obtained from the definition $\tan^{-1}(y_1 - y_0/x_1 - x_0)$. However, the data ratio is decreased. In the case that positioning symbols are disposed at all the corners, it is difficult to recognize the orientation of the code 13. For this reason, it is necessary to provide the orientation determining symbol 11 for identifying the orientation of the code 13.

The timing cells 4, being alternating light and dark cells as shown in Fig. 1, have an arrangement of disposing white cells 4a and black cells 4b alternately so as to diagonally extend from one apex 1a of the two-dimensional code 1. That is, the timing cells 4 are arrayed with a 1/1 inclination (i.e. 45° inclination) in the data region 3 of the two-dimensional code 1. These timing cells 4--4 are used for accurately detecting the coordinates of each data cell. In other words, the density of image data is determined in accordance with intervals of these timing cells 4--4.

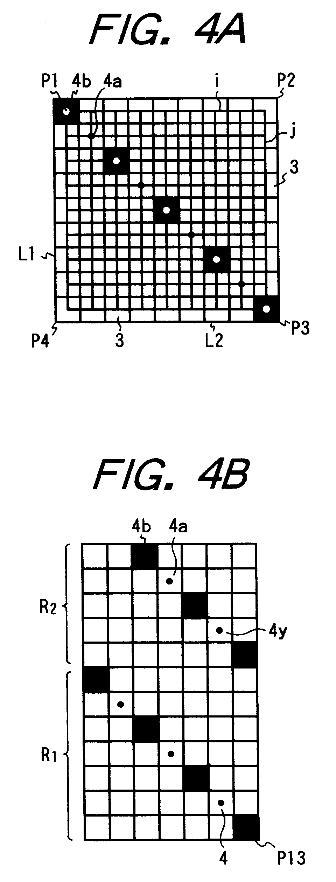

Figs. 4A and 4B show representative arrangements of the timing cells 4. The timing cells 4 disclosed in Fig. 4A are arrayed diagonally from one apex P1 to the other apex P3 in such a manner that light and dark cells 4a and 4b are placed in an alternating manner so as to extend from the left top to the right bottom.

The coordinates of each data cell in the data region 3 can be obtained using these timing cells 4. First of all, the coordinates of the center of each timing cell 4 is obtained. Then, virtual lines i and j are drawn from the centers of timing cells 4 in vertical and lateral directions, each line being parallel to either side L1 or L2 of the two-dimensional code. The virtual lines i--i are laterally extending so as to pass through the coordinates of the centers of the timing cells 4--4, while the other virtual lines j--j are vertically extending so as to pass through the coordinates of the centers of the timing cells 4--4. Intersecting points formed by these virtual lines i--i and j--j are regarded as coordinates of each of data cells 4--4. When compared with another method of obtaining the coordinates of the data cells that divides the entire two-dimensional code by the cell number of vertical and lateral cells, the above-described method of obtaining the coordinates of each data cell using the timing cells 4 is advantageous in that error and affection of code distortion can be eliminated. Thus, the accuracy can be increased in the reading operation.

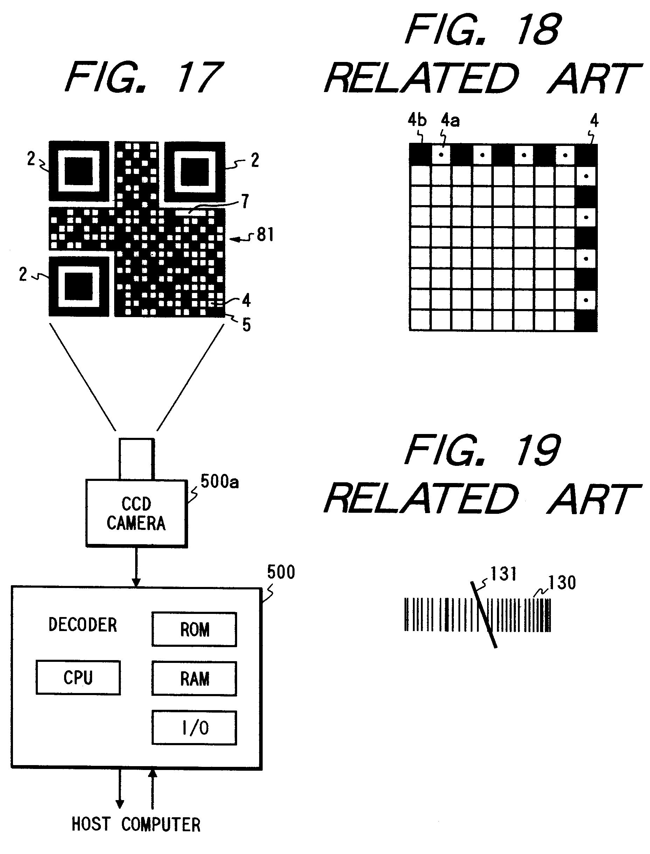

Fig. 18 shows a conventional arrangement of the timing cells 4--4 which are disposed along two adjacent sides of the two-dimensional code. According to this conventional arrangement, the number of timing cells 4 required for a 9x9 matrix is 17. On the contrary, the 9x9 matrix disclosed in Fig. 4A requires only 9 cells. In other words, the number of cells other than data cells can be reduced; therefore, the data ratio of two-dimensional code can be increased.

In the case the code shape is not a square, the timing cells 4 can be diagonally arrayed from an intermediate portion of a side of the code. For example, as shown in Fig. 4B, a series of timing cells 4 arrayed with an 1/1 inclination from an apex P13 can form intersecting points of virtual lines in the region R1, although the remaining region R2 has no intersecting points of virtual lines since it is only given one kind virtual lines (i.e. vertical lines only). It is of course possible to determine the coordinates of data cells in the region R2 based on these one kind virtual lines only. However, it is useful to provide another series of timing cells 4y in the region R2 for additionally forming lateral virtual lines, so that the coordinates of all the cells in the data region can be accurately identified.

In the case of the two-dimensional code disclosed in Fig. 1, the data region 3 includes two protruding regions 3a and 3b where only one kind virtual lines (i.e. either vertical lines or lateral lines) are drawn. However, the area of such a protruding region is so small that accuracy is sufficiently assured without causing substantial problems. Furthermore, the protruding regions 3a and 3b are sandwiched between positioning symbols 2 and 2; therefore, it is technically possible to obtain intersecting points in such regions by drawing the other kind of virtual lines from each positioning symbol 2 based on light and dark pattern thereof. Thus, the coordinates are further accurately obtained.

The data described in the data region 3 is generally encoded together with an error-correcting code restorable when it is contaminated by stain or the like and a CRC code for detecting an error. In particular, burst error-correcting codes are suitable for stain or damage of the code. Among them, a Reed Solomon code is well known since it has an excellent error correcting efficiency.

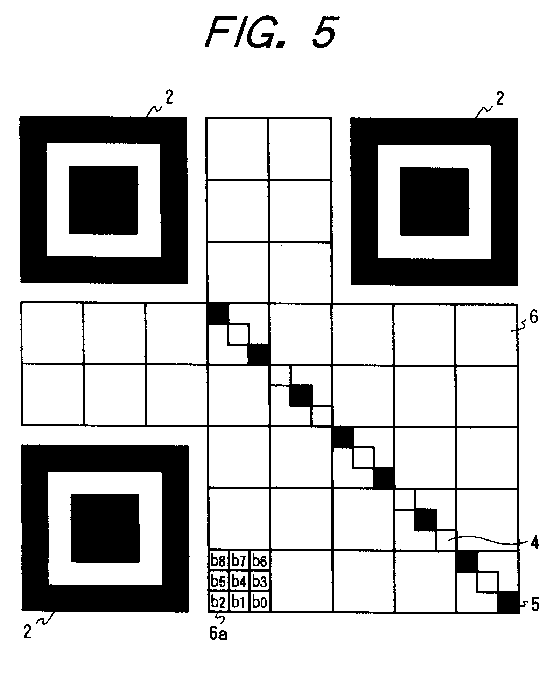

In this embodiment, each character encoded by this kind of burst error-correcting code (which is expressed by a plurality of bits) is placed in the data cell region. Fig. 5 shows one example of such placement of a character. It is preferable that the cells 6a, each corresponding to a bit constituting part of a character, are summarized in a shape similar to a square without being dispersed. The example of Fig. 5 shows a group of nine cells (b0-b8) including eight bits dedicated to data of character and one bit dedicated to the parity. By arranging each cell group 6 of a character in a shape similar to a square in this manner, each character unit becomes strong against stain and damage, and easily enters in an error-correcting region, and thus, its readability is improved.

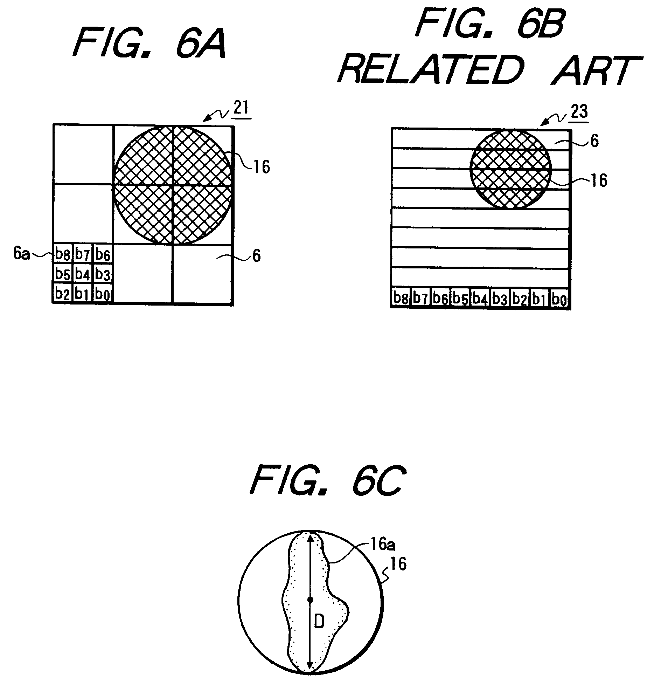

Figs. 6A and 6B illustrate the difference between a square (i.e. a two-dimensional) cell group and a linearly arrayed (i.e. a one- dimensional) cell group respectively representing a character, in order to explain that a two-dimensional code 21 including 3x3 square cell groups 6--6 is superior to a two-dimensional code 23 including 9 linearly arrayed cell groups 6--6 in view of readability under the presence of stain. More specifically, Fig. 6A shows a condition that a circular stain 16 adheres on the two-dimensional code 21 which consists of 3x3 square cell groups 6--6 each representing a character. In this case, the stain 16 is illustrated in a maximum size capable of suppressing the number of spoiled characters to be equal to only four. Fig. 6B shows a condition that another circular stain 16 is attached on the two-dimensional code 23 which consists of 9 linearly arrayed cell groups 6--6 piled up successively each representing a character. Similarly, the stain 16 is illustrated in a maximum size capable of suppressing the number of spoiled characters to be equal to only four.

As it is difficult to predict the shape or angle of stain or damage, it is assumed that a piece of stain 16a shown in Fig. 6C gives the same affection to the character cell groups 6--6 as that of a circular stain 16 having a diameter D. Accordingly, when the overall shape of the character cell groups 6--6 is arranged into a square (3 cells x 3 cells), the maximum diameter of the stain 16 only spoiling four character cell groups 6--6 is identical with the length of six consecutive cells as shown in Fig. 6A. On the other hand, when each character cell group 6 is arranged in a linear shape (1 cell x 9 cells), the maximum diameter of the stain 16 spoiling only four character cell groups 6--6 is identical with the length of four consecutive cells as shown in Fig. 6B. As understood from above, arranging each character cell group 6 into a shape similar to a square is advantageous in suppressing the number of spoiled characters as less as possible when the adverse affection by stain or damage is inevitable. Thus, the characters enter in an error-correcting region and easily read.

As described above, data of each character are allocated in the cells within the data region 3. According to a predetermined character format, either white or black is assigned to each cell 6a in each character cell group 6, thereby completing the pattern of the two-dimensional code 1.

For some data, the following arrangement will be preferable.

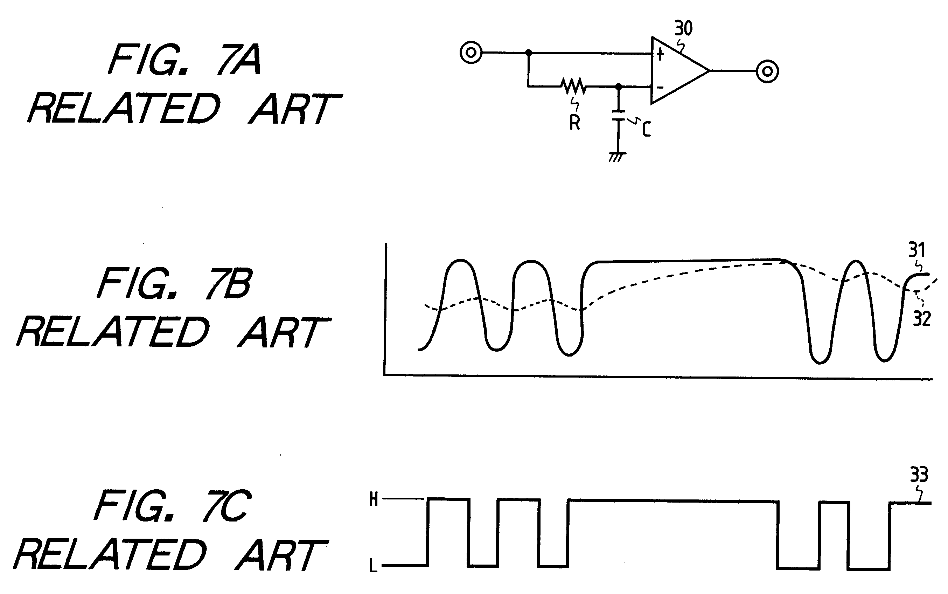

More specifically, if the encoded data is directly placed in the designated cell region without any modification, it is feared that there happen to be consecutive and extensive white cells or black cells which possibly worsen the balance of code. In such a case, accuracy will be deteriorated in the binary encoding operation, which will require a complicated processing and a significant long time. Fig. 7A shows a general binary encoding circuit using a comparator 30, which is speedy in operation and can respond to the change of brightness of the background. According to this kind of binary encoding circuit, a follow-up waveform 32 approaches either a white or a black level of the input waveform 31 as shown in Fig. 7B when white cells or black cells are so consecutively and extensively arrayed. Hence, it cannot assure the fidelity for the binary encoding operation of the next changing cell. It results in that a resultant binary-encoded signal 33 has a width wider or narrower than the actual cell width.

Furthermore, there is a possibility that a certain pattern existing in the data region 3 may have exactly the same frequency component ratio as that of the positioning symbol 2. If such a situation really happens, it is readily presumed that such a data region 3 cannot be discriminated from the positioning symbol 2. In such an occasion, it is definitely necessary to conduct a search in the region including such a confusing data region 3 for detecting the real positioning symbol 2 disposed at the corner of the two-dimensional code. In other words, an additional processing will be required for obtaining a contour of the two-dimensional code. The time required for this kind of additional processing will be elongated with increasing number of confusing data regions 3 which have the identical frequency component ratio.

To solve this problem, there are two preferable methods. One is to provide dummy cells in the data region 3 and the character cell group 6 so as to be flexibly assigned to white or black depending upon the conditions. The other is to totally change the features of the cells according to a predetermined rule after white and black cells are placed in the data region 3. Either way will be practically adaptable, although the former method is disadvantageous in that the data ratio is lowered for provision of dummy cells.

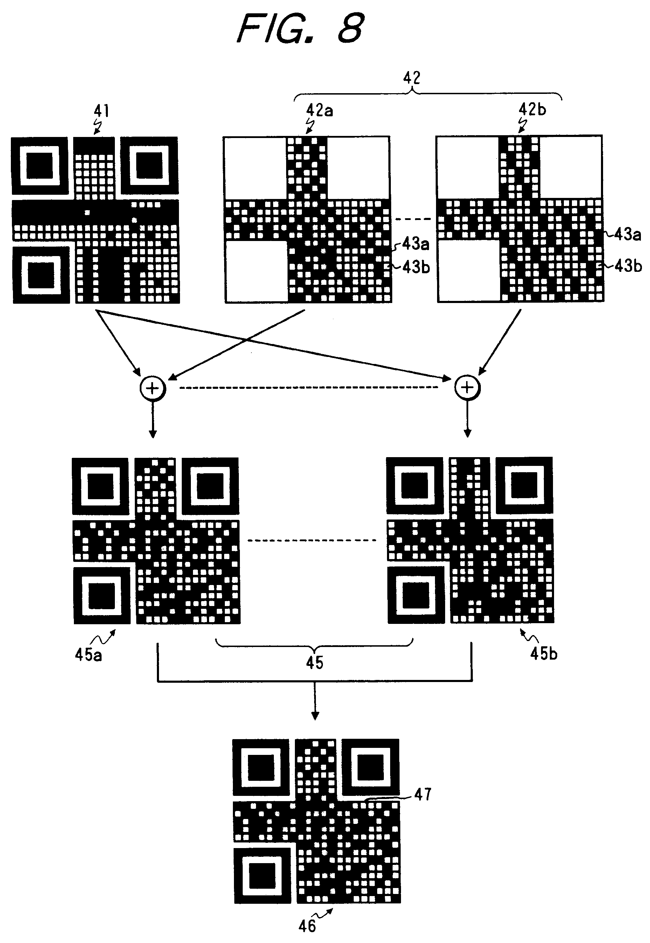

In the case of the latter method, it is generally believed that an appropriate rule changing the feature of the cells is difficult to determine or find out. For this reason, it is desirable to prepare predetermined kinds of rules beforehand and check what kind of change is brought to the cell features in the data region by each of these rules. Once the resultant cell features are all checked, then it will be easy to select the best one among them. This method will be explained in more detail with reference to Fig. 8.

Fig. 8 shows, at upper left, a provisional two-dimensional code 41 including temporarily disposed data, and also shows, at upper center and right, two cell-feature-conversion matrix patterns 42a and 42b which are formed based on random number and certain regularity for changing cell features. The provisional two-dimensional code 41 is combined with each of the cell-feature-conversion matrix patterns 42a and 42b. More specifically, each cell on the provisional two-dimensional code 41 is reversed when its corresponding cell is a black cell 43a on the combined cell-feature-conversion matrix pattern 42a or 42b, while the features of the cell is not changed when its corresponding cell is a white cell 43b on the combined cell-feature-conversion matrix pattern 42a or 42b. In short, the resultant pattern obtained from the above combination is identical with an exclusive-OR taken by the provisional two-dimensional code 41 and the cell-feature-conversion matrix pattern 42a or 42b. The above-described processing is executed with respect each of all the matrix patterns 42 prepared. Thus, a plurality of converted patterns 45 are obtained as much as the number of cell-feature-conversion matrix patterns prepared. Then, a judgement is made as to whether white or black cells are arrayed consecutively and extensively and as to whether there happen to be a group of data cells having the same or similar frequency component ratio as that of the positioning symbol 2. From the result of this judgement, the most preferable data (i.e. an optimum placement pattern) is determined, thereby obtaining a finalized two-dimensional code 46. In the embodiment disclosed in Fig. 8, it will be understood that the left-hand pattern 45a is selected as an optimum placement pattern among plural patterns 45. By the way, this processing is only applied to the data region 3.

Decoding operation of two-dimensional code 46 will be immediately carried out if the number of the cell-feature-conversion matrix patterns 42 is only one.

However, when a plurality of matrix patterns 42 are used as described above, it is definitely necessary to find out the cell-feature-conversion matrix pattern 42 used for creating the finalized two-dimensional code 46. Thus, it is useful that the two-dimensional code 46 stores an information data 47 indicating the type of the conversion matrix pattern 42 used in the conversion processing for obtaining the two-dimensional code 46. If such an information data 47 is included, the data cells can be easily converted or reconstructed into their original pattern by taking an exclusive-OR between the corresponding cell-feature-conversion matrix pattern 42 and the two-dimensional code 46.

Next explained is a means for further improving the performance of the above-described two-dimensional code and easiness in use.

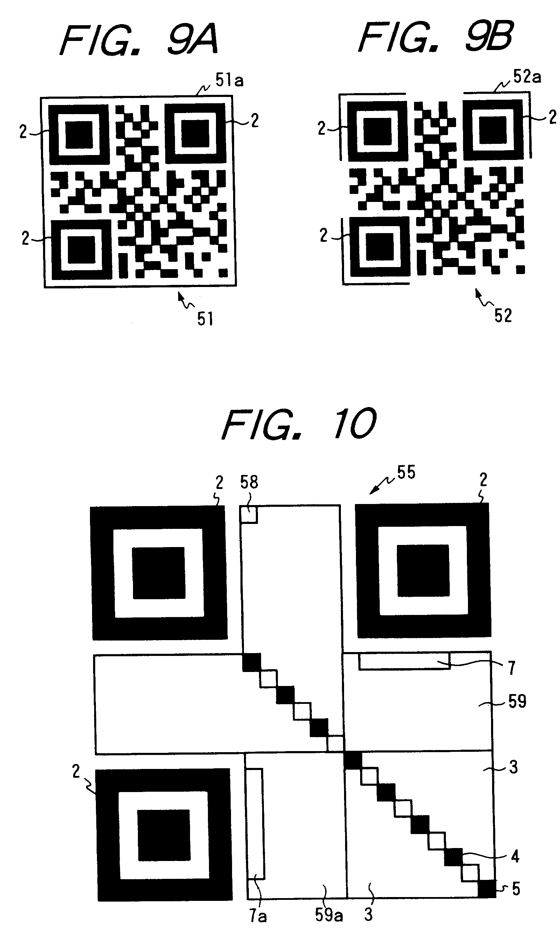

As shown in Figs. 9A and 9B, it is preferable to provide dummy lines along the outer periphery of two-dimensional code 1. Fig. 9A shows an example of dummy black line 51a surrounding all the outer periphery of the two-dimensional code 51, so that the binary-encoding operation for the positioning symbols 2--2 and outer peripheral data cells of the two-dimensional code 51 can be accurately carried out. It is general that the outer periphery of the two-dimensional code is a margin; therefore, it is feared that the outermost black cells in the positioning symbol 2 and the black data cells on the outer periphery cannot be accurately binary encoded as previously explained with reference to Fig. 7. Thus, surrounding the outer periphery of the two-dimensional code 51 by the dummy black line 51a is useful to increase the accuracy in the binary-encoding operation of the black cells in the positioning symbols 2 and in the outer peripheral region.

The positioning symbols 2 are specially important for identifying the position of the matrix; therefore, it is preferable to provide dummy black lines 52a dedicated only to each positioning symbol 2 as shown in Fig. 9B, so that at least the frequency component of each positioning symbol is accurately detected and precisely binary encoded.

In some occasions, it may be required to invalidate the two-dimensional code. For a conventional bar code, the reading operation is easily disabled by simply drawing a line 131 across a bar code 130 as shown in Fig. 19. However, for the two-dimensional code, the length of a required nullifying line will be fairly long due to its two-dimensional arrangement. If the error-correcting code is involved as described above, drawing such a line is no longer effective to completely disable the two-dimensional code.

To solve this problem, as shown in Fig. 10, it is desirable to provide a code-reading-prohibition cell 58 in the two-dimensional code 55. When the cell 58 is black, a reading device is prohibited to execute a reading operation. That is, the code-reading-prohibition cell 58 is checked prior to the decoding operation, and the decoding operation is prohibited when the cell 58 is black.

Furthermore, the two-dimensional code 55 may include an important information 59 or a cell-feature-conversion matrix pattern information 7. In view of adverse affection by stain, damage or brightness change of the background, it is preferable to dispose the same information 59a and 7a at different positions spaced from these information 59 and 7. Thus, even if one of two same information is spoiled, this arrangement allows the reading device to read at least the other information (i.e. non-spoiled one), thereby assuring the reading operation of the important information 59 or 59a and the cell-feature-conversion matrix pattern information 7 or 7a.

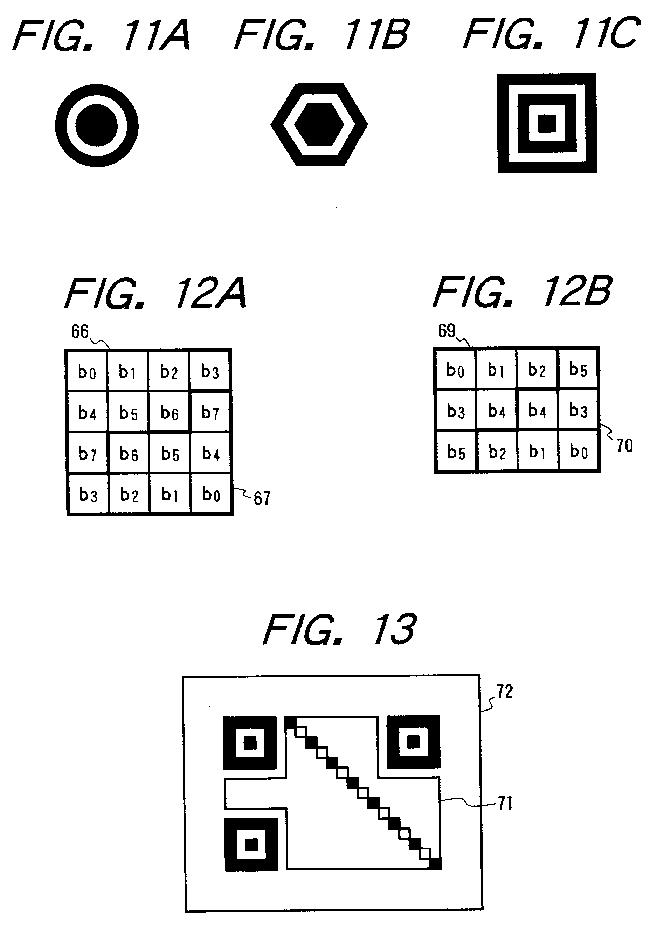

The above-described embodiment discloses the positioning symbols 2 of concentric squares having a predetermined frequency component ratio—black : white : black : white : black = 1 : 1 : 3 : 1 : 1, along a straight scanning line passing through the center thereof. However, it is needless to say that the positioning symbol 2 can be constituted by concentric circles as shown in Fig. 11A, or concentric hexagons as shown in Fig. 11B, or any other concentric polygons. In short, any concentric similar figures overlapped successively can be used as positioning symbol 2. Furthermore, as long as the frequency component ratio along a straight scanning line passing through the center of the positioning symbol 2 is constant irrespective of the angle of the scanning angle, the similar figures can be overlapped more as shown in Fig. 11C.

Although the above-described embodiment shows the arrangement that one character cell group 6 is arranged in a square, it is also possible to combine two character cell groups 66 and 67 as shown in Fig. 12A so as to form a square cooperatively. If it is difficult to obtain a complete square, it is further possible to constitute a rectangle as shown in Fig. 12B, so that combined character cell groups 69 and 70 cooperatively form a shape closer to a square.

Yet further, although the above-described embodiment discloses the two-dimensional code 1 having a square contour, it is needless to say that the square contour can be replaced by a rectangular contour. Especially, when the two-dimensional code is read by a handy scanner, and when the scanner can be rotatable in accordance with the rotational position of the two-dimensional code, a laterally elongated shape will be generally preferable as shown by a two-dimensional code 71 in Fig. 13, since such a shape well meets the lateral and vertical resolutions. By forming the two-dimensional code 71 in such a shape, data cells can be most effectively arranged within the reading area 72. Thus, it becomes possible to increase the amount of storable data.

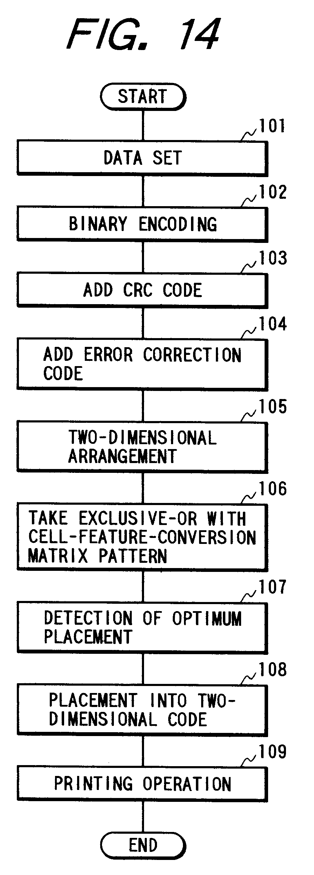

Next, a series of processes ranging from an encoding operation of two-dimensional codes to a printing operation will be explained with reference to Fig. 14. This processing is executed by a data processing apparatus of a two-dimensional code printing machine not shown.

First of all, data are set in a work memory (Step 101). Then, objective data are binary encoded into "0" or "1" to form a two-dimensional code (Step 102). Subsequently, an error detecting code (CRC) and an error-correcting code are attached to the data (Steps 103 and 104) . Thereafter, these data are arranged in a two-dimensional pattern according to a predetermined rude (Step 105). Next, an exclusive-OR is taken by the resultant data pattern and each of cell-feature-conversion matrix patterns prepared beforehand (Step 106). Then, an optimum placement pattern is selected among resultant patterns (Step 107). After that, the optimum placement pattern is placed in the two-dimensional code (Step 108). Then, the printing operation is executed (Step 109).

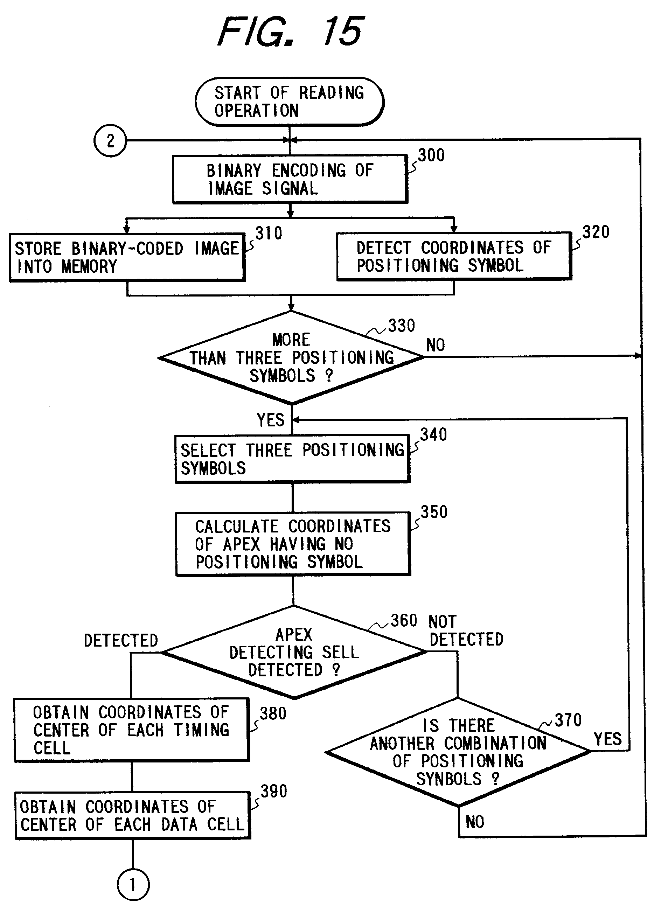

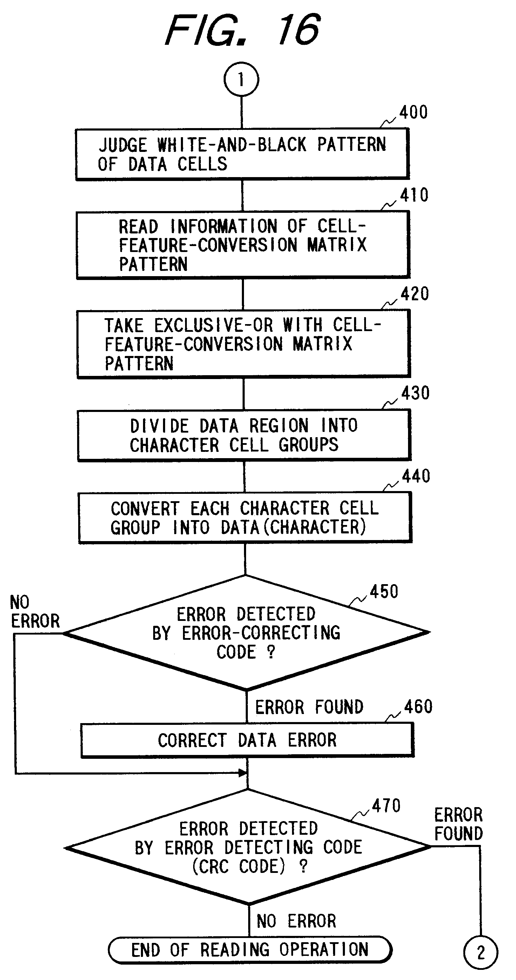

Next, a reading processing will be explained with reference to the flow charts of Figs. 15 and 16. For this processing, a CCD camera 500a takes an image of cells in a two-dimensional code 81, then converts the image into analog or digital signals pixel by pixel in response to light intensity of the image, and successively outputting resultant image signals. The pixel corresponds to each cell of the two-dimensional code 81. A decoder 500, comprising a CPU, a ROM, a RAM and an I/O unit, decodes the image signals of the two-dimensional code 81 into binary-coded signals, as shown in Fig. 17.

After the reading operation is started, the image signals produced from the CCD camera 500a are binary encoded (Step 300) in accordance with a level of each signal, thereby successively producing binary-coded signals. The binary-coded image signals are successively stored into a memory (RAM) as an image data every pixel through a hardware processing (Step 310). Meanwhile, as a parallel hardware processing, the coordinates of the positioning symbols 2 are detected based on the binary-coded image signals (Step 320). Namely, the specific pattern (i.e. the frequency component ratio of Fig. 2B) corresponding to the positioning symbol 2 is searched based on the binary-coded signals.

Subsequently, a judgement is made as to whether more than three positioning symbols 2--2 are found or not (Step 330). Namely, the coordinates of each symbol 2 is obtained from the image data stored in the memory means (RAM) based on the detection of the specific pattern (Fig. 2B). The procedure of this flow chart does not proceed to the next step unless it completely detects all of three positioning symbols 2--2 of the two-dimensional code 81. Accordingly, when three positioning symbols are not found, the procedure returns to the step 300 to repeat the reading operation of image again. It may happen that a total of four positioning symbols 2--2 are detected at a time. This is believed that a confusing pattern having exactly the same frequency component ratio as that of the positioning symbol 2 exists in the data region of the two-dimensional code 81 or in a region outside the two-dimensional code 81.

Thus, three of thus found positioning symbols 2--2, although they are mere candidates of positioning symbols 2--2 at this moment, are selected (Step 340). Then, the coordinates of an apex having no positioning symbol 2 is calculated (Step 350). Thereafter, a judgement is made as to whether the apex detecting cell 5 is found at the position obtained in the step 350 (Step 360) . If the apex detecting cell 5 is not detected, it is considered that selection and combination were improper. Thus, the next judgement is made as to whether there is another possible combination of the positioning symbols 2--2 (Step 370). If the answer is YES, the procedure returns to the step 340 to change the combination of the positioning symbols 2--2. If the apex detecting cell 5 is not found (i.e. "NO" in the step 370) as a result of repetitive detections based on any possible selection and combination, then the procedure returns to the step 300 to restart the binary-encoding processing of the image signals.

On the contrary, when the apex detecting cell 5 is found in the step 360, the coordinates of a center of each timing cell 4 are obtained by detecting the alternately extending light and dark timing cells 4--4 one after another along a diagonal from the apex detecting cell 5 (Step 380). Then, virtual lines are drawn from the centers of these timing cells 4--4, thereby obtaining the coordinates of a center of each data cell (Step 390).

In short, above-described sequential steps 340-390 finalise the contour and orientation of the two-dimensional matrix based on the coordinates of the positioning symbols 2--as previously explained with reference to Figs. 3A-3C and equations (1)-(8), thereby identifying all the coordinates of the binary-coded cells placed on the two-dimensional matrix. In turn, on the basis of thus finalized contour and orientation of the two-dimensional matrix, the following processes are executed for reading out the image data stored in the memory means (RAM).

After determining all the coordinates of centers of the data cells, a white-and-black pattern of the data cells is judged based on the image data (step 400). Next, the cell-feature-conversion matrix pattern information 7 is read (Step 410). More specifically, the cell-feature-conversion matrix pattern is read out from the ROM, RAM or an external memory device not shown. Subsequently, an exclusive-OR is taken between thus readout conversion matrix pattern and the data cell pattern judged in the step 400, thereby restoring the content of the data cells (Step 420).

Above-described steps 410 and 420 can be omitted when the cell features of the two-dimensional code is not converted.

Thereafter, the data region is divided into individual character cell groups (Step 430). It is needless to say that division is executed in accordance with the placement of character cell groups as shown in Figs. 6A and 6B or Figs. 12A and 12B.

Individual data involved in each character cell group are converted into a corresponding character (Step 440). Next, a judgement is made as to whether error is detected based on the error-correcting code (Step 450). If any error is found, the error correction of data is executed (Step 460). When no error is found in the step 450 or after the error correction of data is finished, another judgement is made as to whether any error is found based on the error detecting code (i.e. CRC code) (Step 470). If no error is found, the procedure is terminated. If any error is found, the procedure returns to the step 300 to restart all the processing from the beginning.

Once the decoding of data from two-dimensional code is completed in this manner, the resultant data are transmitted to a host computer (not shown) wherein a predetermined control is executed based on these data.

According to the present invention, the positioning symbol assures the same characteristic frequency component ratio to be obtained irrespective of the orientation of a straight scanning line. Hence, it is not necessary to repeat the scanning operation changing its scanning angle. Thus, in the matrix, at least two predetermined positions are quickly and easily detected. Once the positions of the predetermined two positions are detected in the matrix, the position and a rotational angle of the whole matrix is easily calculated based on the distance and angle between them.

When the predetermined positions are apexes of the matrix, they will be immediately found in the scanning search, and are seldom disturbed by other code patterns when they are searched.

The shape of the matrix is generally a square or a rectangle. Thus, a preferable shape of the positioning symbol is a square or a rectangle since it fits to the shape of the matrix and loss of space can be suppressed at a minimum level. Particularly, a square is most preferable since it assures a least loss.

When the matrix includes a series of light and dark cells alternately extending with an inclination 1/1, the number of cells used for the alternating light-and-dark cells can be fairly reduced. Thus, the remaining cells can be effectively used for a space available for other useful information.

Furthermore, when the cell group representing one character is arranged in a two-dimensional pattern, such a two-dimensional arrangement is advantageous in that the number of characters becoming unreadable due to the presence of stain having a predetermined area is minimized. Thus, it becomes possible to minimize the number of characters spoiled by the stain.

The data cells can be converted into a pattern discriminable from the characteristic patterns of the positioning symbols and the 1/1 inclined alternating light-and-dark cells. It will facilitate the discrimination of the data cells from the positioning symbols and the 1/1 inclined alternating light-and-dark cells. The processing will become simple and speedy.

Furthermore, in cases where the matrix has a corner having no positioning symbol, detection of such a corner can be facilitated by disposing the apex detecting cell at that corner of the matrix.

As this invention may be embodied in several forms without departing from the essential characteristics thereof, the present embodiments as described are therefore intended to be only illustrative and not restrictive, since the scope of the invention is defined by the appended claims rather than by the description preceding them.

## Claims

1. A two-dimensional code, comprising:

   cells (b0-b8) each representing a binary-coded data,
   said cells being placed on a two-dimensional matrix (1) as a pattern which is readable by a scanning operation along a predetermined scanning line; characterized in that
   at least two positioning symbols (2) are disposed at predetermined positions in said matrix, each of said positioning symbols (2) having a pattern capable of producing a waveform having an identical element width ratio irrespective of any orientation of said scanning line when said scanning line passes through the center of each positioning symbol.

2. The two-dimensional code in accordance with claim 1, wherein said predetermined positions are apexes of said two-dimensional matrix (1).

3. The two-dimensional code in accordance with claim 1 or 2, wherein each said positioning symbol has a pattern including concentric similar figures (2a, 2b and 2c) of decreasing size overlapped successively.

4. The two-dimensional code in accordance with claim 1, further comprising a series of timing cells (4) including alternate light and dark cells (4a and 4b), said series having an inclination of 45° in said two-dimensional matrix (1).

5. The two-dimensional code in accordance with claim 1, wherein said binary-coded data includes a plurality of characters (6), and each of said characters is represented by a group of cells (6a) disposed in a two-dimensional region (3) in said matrix (1).

6. The two-dimensional code in accordance with claim 1, further comprising an apex detecting cell (5) disposed on an apex of said two-dimensional matrix (1) where none of said positioning symbols is disposed.

7. A two-dimensional code reading apparatus for optically reading the two-dimensional code defined in claim 1, said reading apparatus comprising:

   an image pickup device (500a) taking an image of said two-dimensional code (81), then converting the image into image signals pixel by pixel in response to light intensity of the image, and successively outputting resultant image signals; and
   a decoder unit (500) decoding said resultant image signals into binary-coded signals;
   wherein said decoder unit (500) comprises:
   binary-encoding means (CPU; Step 300) for binary encoding said image signals in accordance with a level of each signal, and outputting binary-coded signals successively;
   memory means (RAM) for storing said binary-coded signals as image data in accordance with a position of a pixel where the image was taken;
   symbol detecting means (CPU; Step 320) for detecting the specific pattern corresponding to each of said positioning symbols (2) based on said binary-coded signals and detecting the coordinates of each of said symbols (2) from the image data stored in said memory means (RAM) based on said detected specific pattern;
   matrix position determining means (CPU; Steps 340-390) for finalizing a contour and an orientation of said two dimensional matrix based on the coordinates of the symbols (2) detected by said symbol detecting means, thereby identifying all the coordinates of said binary-coded cells placed on the two-dimensional matrix; and
   reading means (CPU; Step 400-470) for reading out said image data stored in said memory means (RAM) in accordance with the finalized contour and orientation of said two dimensional matrix.

8. The two-dimensional code reading apparatus in accordance with claim 7, wherein

   said two-dimensional code (81) comprises a series of timing cells (4) including alternate light and dark cells (4a and 4b) arranged in said matrix (1), optically readable by said image pickup device (500a); and
   said decoder unit (500) further comprises timing cell detecting means (CPU; Step 280) for detecting coordinates of each timing cell (4) from the image data stored in said memory means (RAM) in accordance with the coordinates of said symbols (2) obtained by said symbol detecting means (CPU; Step 320), said timing cells (4) determining the density of the image data in accordance with the intervals of the timing cells.

9. The two-dimensional code reading apparatus in accordance with claim 7, wherein

said two-dimensional code (81) is created by performing an exclusive-OR operation cell by cell between a predetermined provisional two dimensional code (41) and a two-dimensional cell-feature conversion code (42) which includes a specific conversion pattern represented by light and dark cells corresponding to the data region of said provisional two-dimensional code (41); and

said reading means (CPU; Step 400-470) restores the information of said provisional two-dimensional code (41) by performing an exclusive-OR operation cell by cell between the two-dimensional image data obtained from said image pickup means (500a) and two-dimensional image data of said two-dimensional cell-feature-conversion code (42) stored in said memory means (RAM).

10. A two-dimensional code reading method for optically reading the two-dimensional code defined in claim 1, comprising the steps of:

taking an image of said two-dimensional code (81) by an image pickup device (500a), then converting the image into image signals pixel by pixel in response to light intensity of the image, and binary encoding (Step 300) said image signals in accordance with a level of each signal, then storing (Step 310) thus binary-coded signals as image data in a memory means (RAM) in accordance with a position of a pixel where the image was taken;

detecting (Step 320) the specific pattern corresponding to each of said positioning symbols (2) based on said binary-coded signals, as a parallel processing to said step (Step 310) of storing the binary-coded signals in the memory means (RAM);

detecting (Step 320) coordinates of each of said symbols (2) from the image data stored in said memory means (RAM) based on the detection of said specific pattern;

finalizing (Steps 340-390) a contour and an orientation of said two-dimensional matrix based on the coordinates of the symbols (2), thereby identifying all the coordinates of said binary-coded cells placed on the two-dimensional matrix; and

reading out (Step 400-470) said image data stored in said memory means (RAM) in accordance with the finalized contour and orientation of said two-dimensional matrix.

**Patentansprüche**

1. Zweidimensionaler Code mit:

Zellen (b0-b8), welche jeweils binär kodierte Daten darstellen,

wobei die Zellen auf einer zweidimensionalen Matrix (1) als Muster plaziert sind, welches durch eine Abtastoperation entlang einer vorbestimmten Abtastlinie lesbar ist; dadurch gekennzeichnet, dass

wenigstens zwei Positionierungssymbole (2) an vorbestimmten Positionen in der Matrix angeordnet sind, wobei jedes der Positionierungssymbole (2) ein Muster aufweist, welches zum Erzeugen einer Wellenform mit einem identischen Elementebreitenverhältnis unabhängig von irgendeiner Ausrichtung der Abtastlinie geeignet ist, wenn die Abtastlinie durch die Mitte jedes Positionierungssymbols hindurchtritt.

2. Zweidimensionaler Code nach Anspruch 1, dadurch gekennzeichnet, dass die vorbestimmten Positionen Gipfelpunkte der zweidimensionalen Matrix (1) sind.

3. Zweidimensionaler Code nach Anspruch 1 oder 2, dadurch gekennzeichnet, dass jedes Positionierungssymbol ein Muster aufweist, welches ähnliche konzentrische Figuren (2a, 2b und 2c) von einer sich verringernden Größe enthält, die aufeinanderfolgend überlappt sind.

4. Zweidimensionaler Code nach Anspruch 1, des weiteren gekennzeichnet durch eine Reihe von Timing-Zellen (4), welche abwechselnd helle und dunkle Zellen (4a und 4b) enthalten, wobei die Reihe eine Neigung von 45° in der zweidimemsionalen Matrix (1) aufweist.

5. Zweidimensionaler Code nach Anspruch 1, dadurch gekennzeichnet, dass die binär codierten Daten eine Mehrzahl von Schriftzeichen (6) enthalten und jedes der Schriftzeichen durch eine Gruppe von Zellen (6a) dargestellt wird, welche in einem zweidimensionalen Gebiet (3) in der Matrix (1) angeordnet sind.

6. Zweidimensionaler Code nach Anspruch 1, des weiteren gekennzeichnet durch eine Gipfelpunkterfassungszelle (5), welche auf einem Gipfelpunkt der zweidimensionalen Matrix (1) angeordnet ist, wo keines der Positionierungssymbole angeordnet ist.

**7.** Zweidimensionales Codelesegerät zum optischen Lesen des in Anspruch 1 definierten zweidimensionalen Codes, mit:

einem Bildaufnahmegerät (500a), welches ein Bild des zweidimensionalen Codes (81) aufnimmt, danach das Bild in Bildsignale, Pixel um Pixel, im Ansprechen auf die Lichtintensität des Bilds umwandelt und darauffolgend resultierende Bildsignale ausgibt;

einer Decodereinheit (500), welche die resultierenden Bildsignale in binär kodierte Signale dekodiert;

wobei die Decodereinheit (500) aufweist:

eine binäre Kodiereinrichtung (CPU; Schritt 300), welche die Bildsignale entsprechend einem Pegel von jedem Signal binär kodiert und die binär kodierten Signale aufeinanderfolgend ausgibt;

eine Speichereinrichtung (RAM), welcher die binär kodierten Signale als Bilddaten entsprechend einer Position eines Pixels speichert, wo das Bild aufgenommen worden ist;

eine Symbolerfassungseinrichtung (CPU; Schritt 320), welche das spezifische Muster entsprechend jedem der Positionierungssymbole (2) auf der Grundlage der binär kodierten Signale erfasst und die Koordinaten von jedem der Symbole (2) von den in der Speichereinrichtung (RAM) gespeicherten Bilddaten auf der Grundlage des erfassten spezifischen Musters erfasst;

eine Matrixpositionsbestimmungseinrichtung (CPU; Schritte 340-390), welche eine Kontur und eine Ausrichtung der zweidimensionalen Matrix auf der Grundlage der Koordinaten der von der Symbolerfassungseinrichtung erfassten Symbole (2) vollendet, wodurch alle Koordinaten der binär kodierten Zellen identifiziert werden, welche auf der zweidimensionalen Matrix plaziert sind; und

eine Leseeinrichtung (CPU; Schritt 400-470), welche die in der Speichereinrichtung (RAM) gespeicherten Bilddaten entsprechend der vollendeten Kontur und Ausrichtung der zweidimensionalen Matrix ausliest.

**8.** Zweidimensionales Codelesegerät nach Anspruch 7, dadurch gekennzeichnet, dass

der zweidimensionale Code (81) eine Reihe von Timing-Zellen (4) aufweist, welche abwechselnd helle und dunkle Zellen (4a und 4b) enthalten, die in der Matrix (1) angeordnet und durch das Bildaufnahmegerät (500a) optisch lesbar sind; und

die Decodereinheit (5) des weiteren eine Timing-Zellenerfassungseinrichtung (CPU; Schritt 380) aufweist, welche Koordinaten jeder Timing-Zelle (4) von den in der Speichereinrichtung (RAM) gespeicherten Bilddaten entsprechend den Koordinaten der durch die Symbolerfassungseinrichtung (CPU; Schritt 320) erlangten Symbole (2) erfasst, wobei die Timing-Zellen (4) die Dichte der Bilddaten entsprechend den Intervallen der Timing-Zellen bestimmen.

**9.** Zweidimensionales Codelesegerät nach Anspruch 7, dadurch gekennzeichnet, dass

der zweidimensionale Code (81) unter Durchführung einer exklusiven ODER-Operation, Zelle um Zelle, zwischen einem vorbestimmten provisorischen zweidimensionalen Code (41) und einem zweidimensionalen Zellenmerkmalumwandlungscode (42) erzeugt wird, welcher ein spezifisches Umwandlungsmuster enthält, das durch helle und dunkle Zellen entsprechend dem Datengebiet des provisorischen zweidimensionalen Codes (41) dargestellt wird; und

die Leseeinrichtung (CPU; Schritt 400-470) die Information des provisorischen zweidimensionalen Codes (42) unter Durchführung einer exklusiven ODER-Operation, Zelle um Zelle, zwischen den von der Bildaufnahmeeinrichtung (500a)) erlangten zweidimensionalen Bilddaten und den zweidimensionalen Bilddaten des in der Speichereinrichtung (RAM) gespeicherten zweidimensionalen Zellenmerkmalumwandlungscodes (42) wiederherstellt.

**10.** Zweidimensionales Codeleseverfahren zum optischen Lesen des in Anspruch 1 definierten zweidimensionalen Codes, mit den Schritten:

Aufnehmen eines Bilds des zweidimensionalen Codes (81) durch ein Bildaufnahmegerät (500a), danach Umwandeln des Bilds in Bildsignale, Pixel um Pixel, im Ansprechen auf die Lichtintensität des Bilds und binäres Kodieren (Schritt 300) der Bildsignale entsprechend einem Pegel jedes Signals, danach Speichern (Schritt 310) der derart binär kodierten Signale als Bilddaten in einer Speichereinrichtung (RAM) entsprechend einer Position eines Pixels, wo das Bild aufgenommen worden ist; Erfassen (Schritt 320) des spezifischen Musters entsprechend jedem der Positionierungssymbole (2) auf der Grundlage der binär kodierten Signale als Verarbeitung parallel zu dem Schritt (Schritt 310) des Speicherns der binär kodierten Signale in der Speichereinrichtung (RAM);

Erfassen (Schritt 320) von Koordinaten jedes der Symbole (2) von den in der Speichereinrichtung (RAM) gespeicherten Bilddaten auf der Grundlage der Erfassung des spezifischen Musters;

Vollenden (Schritte 340-390) einer Kontur und einer Orientierung der zweidimensionalen Matrix auf der Grundlage der Koordinaten der Symbole (2), wodurch alle Koordinaten der binär kodierten Zellen identifiziert werden, welche auf der zweidimensionalen Matrix plaziert sind; und

Auslesen (Schritt 400-470) der in der Speichereinrichtung (RAM) gespeicherten Bilddaten entsprechend der vollendeten Kontur und Ausrichtung der zweidimensionalen Matrix.

## Revendications

1. Code à deux dimensions, comprenant :

   des cellules (b0 à b8) représentant chacune des données codées en binaire,
   lesdites cellules étant placées sur une matrice à deux dimensions (1) en un motif qui est lisible par une opération de numérisation le long d'une ligne de balayage prédéterminée ; caractérisé en ce que
   au moins deux symboles de positionnement (2) sont disposés à des positions prédéterminées dans ladite matrice, chacun desdits symboles de positionnement (2) présentant un motif capable de produire une forme d'onde possédant un rapport de largeur d'élément identique indépendamment de toute orientation de ladite ligne de balayage lorsque ladite ligne de balayage passe par le centre de chaque symbole de positionnement.

2. Code à deux dimensions selon la revendication 1, dans lequel lesdites positions prédéterminées sont des sommets de ladite matrice à deux dimensions (1).

3. Code à deux dimensions selon la revendication 1 ou 2, dans lequel chacun desdits symboles de positionnement présente un motif incluant des figures similaires concentriques (2a, 2b et 2c) de taille décroissante se recouvrant successivement.

4. Code à deux dimensions selon la revendication 1, comprenant en outre une série de cellules de cadencement (4) incluant des cellules alternativement claires et sombres (4a et 4b), lesdites séries présentant une inclinaison de 450° dans ladite matrice à deux dimensions (1).

5. Code à deux dimensions selon la revendication 1, dans lequel lesdites données codées en binaire incluent une pluralité de caractères (6), et chacun desdits caractères est représenté par un groupe de cellules (6a) disposé dans une région (3) à deux dimensions dans ladite matrice (1).

6. Code à deux dimensions selon la revendication 1, comprenant en outre une cellule de détection de sommet (5) disposée sur un sommet de ladite matrice à deux dimensions (1) où aucun desdits symboles de positionnement n'est disposé.

7. Appareil de lecture de code à deux dimensions pour lire de façon optique le code à deux dimensions défini dans la revendication 1, ledit appareil de lecture comprenant :

   un dispositif de prise d'image (500a) prenant une image dudit code à deux dimensions (81), convertissant ensuite l'image en signaux d'image pixel par pixel en réponse à l'intensité de lumière de l'image, et délivrant en sortie successivement des signaux d'image résultants ; et
   une unité de décodeur (500) décodant lesdits signaux d'image résultants en signaux codés en binaire ;
   dans lequel ladite unité de décodeur (500) comprend :
   un moyen de codage binaire (U.C. ; étape 300) pour coder en binaire lesdits signaux d'image conformément à un niveau de chaque signal, et délivrer successivement des signaux codés en binaire ;
   un moyen de mémoire (RAM) pour mémoriser lesdits signaux codés en binaire en tant que données d'image conformément à une position d'un pixel où l'image a été prise ;
   un moyen de détection de symbole (U.C. ; étape 320) pour détecter le motif spécifique correspondant à chacun desdits symboles de positionnement (2) sur la base desdits signaux codés en binaire et détecter les coordonnées de chacun desdits symboles (2) à partir des données d'image mémorisées dans ledit moyen de mémoire (RAM) sur la base dudit motif spécifique détecté ;
   un moyen de détermination de position de matrice (U.C. ; étapes 340 à 390) pour finaliser un contour et une orientation de ladite matrice à deux dimensions sur la base des coordonnées des symboles (2) détectés par ledit moyen de détection de symbole, identifiant de ce fait toutes les coordonnées desdites cellules codées en binaire placées sur la matrice à deux dimensions ; et

un moyen de lecture (U.C. ; étapes 400 à 470) pour extraire lesdites données d'image mémorisées dans ledit moyen de mémoire (RAM) conformément au contour finalisé et à l'orientation de ladite matrice à deux dimensions.

8. Appareil de lecture de code à deux dimensions selon la revendication 7, dans lequel

ledit code à deux dimensions (81) comprend une série de cellules de cadencement (4) incluant des cellules alternativement claires et sombres (4a et 4b) disposées dans ladite matrice (1), lisibles de façon optique par ledit dispositif de prise d'image (500a) ; et ladite unité de décodeur (500) comprend en outre un moyen de détection de cellules de cadencement (U.C. ; étape 380) pour détecter les coordonnées de chaque cellule de cadencement (4) à partir des données d'image mémorisées dans ledit moyen de mémoire (RAM) conformément aux coordonnées desdits symboles (2) obtenues par ledit moyen de détection de symbole (U.C. ; étape 320), lesdites cellules de cadencement (4) déterminant la densité des données d'image conformément aux intervalles des cellules de cadencement.

9. Appareil de lecture de code à deux dimensions selon la revendication 7, dans lequel

ledit code à deux dimensions (81) est créé en effectuant une opération OU exclusif cellule par cellule entre un code à deux dimensions provisoire prédéterminé (41) et un code de conversion de caractéristique de cellule à deux dimensions (42) qui inclut un motif de conversion spécifique représenté par des cellules claires et sombres correspondant à la région de données dudit code à deux dimensions provisoire (41) ; et ledit moyen de lecture (U.C. ; étapes 400 à 470) restitue les informations dudit code à deux dimensions provisoire (41) en effectuant une opération OU exclusif cellule par cellule entre les données d'image à deux dimensions obtenues à partir dudit moyen de prise d'image (500a) et les données d'image à deux dimensions dudit code de conversion de caractéristique de cellule à deux dimensions (42) mémorisées dans ledit moyen de mémoire (RAM).

10. Procédé de lecture de code à deux dimensions pour lire de façon optique le code à deux dimensions défini dans la revendication 1, comprenant les étapes consistant à :

prendre une image dudit code à deux dimensions (81) par un dispositif de prise d'image (500a), convertir ensuite l'image en signaux d'image pixel par pixel en réponse à l'intensité de lumière de l'image, et à coder en binaire (étape 300) lesdits signaux d'image conformément à un niveau de chaque signal, mémoriser ensuite (étape 310) les signaux ainsi codés en binaire en tant que données d'image dans un moyen de mémoire (RAM) conformément à une position d'un pixel où l'image a été prise ; détecter (étape 320) le motif spécifique correspondant à chacun desdits symboles de positionnement (2) sur la base desdits signaux codés en binaire, en tant qu'un traitement parallèle à ladite étape (étape 310) de mémorisation des signaux codés en binaire dans le moyen de mémoire (RAM) ; détecter (étape 320) les coordonnées de chacun desdits symboles (2) à partir des données d'image mémorisées dans ledit moyen de mémoire (RAM) sur la base de la détection dudit motif spécifique ; finaliser (étapes 340 à 390) un contour et une orientation de ladite matrice à deux dimensions sur la base des coordonnées des symboles (2), identifiant de ce fait toutes les coordonnées desdites cellules codées en binaire placées sur la matrice à deux dimensions ; et extraire (étapes 400 à 470) lesdites données d'image mémorisées dans ledit moyen de mémoire (RAM) conformément au contour finalisé et à l'orientation de ladite matrice à deux dimensions.

# FIG. 1

# FIG. 2A

# FIG. 2B

FIG. 3A

$X$ $(x_0, y_0)$
$\theta_1$
$(x_1, y_1)$ 2 3 $\underline{8}$
2 5
$(X_0, Y_0)$
2
$(x_2, y_2)$

FIG. 3B

$(x_0, y_0)$
$\theta_2$
$(X_1, Y_1)$ 2 3 $\underline{9}$
5
5
$(X_3, Y_3)$
2
11
$(x_2, y_2)$

FIG. 3C

$(x_0, y_0)$
$\theta_3$
$(x_1, y_1)$ 2 3 $\underline{13}$
2
2
$(x_3, y_3)$
2
11
$(x_2, y_2)$

## FIG. 4A

## FIG. 4B

# FIG. 5

FIG. 6A

FIG. 6B
RELATED ART

FIG. 6C

FIG. 7A
RELATED ART

FIG. 7B
RELATED ART

FIG. 7C
RELATED ART

# FIG. 8

# FIG. 9A

# FIG. 9B

# FIG. 10

# FIG. 11A  FIG. 11B  FIG. 11C

# FIG. 12A

66

| b0 | b1 | b2 | b3 |
|----|----|----|----|
| b4 | b5 | b6 | b7 |
| b7 | b6 | b5 | b4 |
| b3 | b2 | b1 | b0 |

67

# FIG. 12B

69

| b0 | b1 | b2 | b5 |
|----|----|----|----|
| b3 | b4 | b4 | b3 |
| b5 | b2 | b1 | b0 |

70

# FIG. 13

72

71

# FIG. 14

```
              ( START )
                  │
                  │              101
          ┌───────────────────┐
          │     DATA SET       │
          └───────────────────┘
                  │              102
          ┌───────────────────┐
          │  BINARY ENCODING   │
          └───────────────────┘
                  │              103
          ┌───────────────────┐
          │   ADD CRC CODE     │
          └───────────────────┘
                  │              104
          ┌───────────────────┐
          │ ADD ERROR CORRECTION│
          │ CODE                │
          └───────────────────┘
                  │              105
          ┌───────────────────┐
          │  TWO-DIMENSIONAL   │
          │  ARRANGEMENT       │
          └───────────────────┘
                  │              106
          ┌───────────────────┐
          │ TAKE EXCLUSIVE-OR WITH│
          │ CELL-FEATURE-CONVERSION│
          │ MATRIX PATTERN      │
          └───────────────────┘
                  │              107
          ┌───────────────────┐
          │ DETECTION OF OPTIMUM│
          │ PLACEMENT           │
          └───────────────────┘
                  │              108
          ┌───────────────────┐
          │ PLACEMENT INTO TWO- │
          │ DIMENSIONAL CODE    │
          └───────────────────┘
                  │              109
          ┌───────────────────┐
          │ PRINTING OPERATION  │
          └───────────────────┘
                  │
               (  END  )
```

## FIG. 15

```
        ( START OF READING )
        (     OPERATION     )
                 │
  (2)─────────────┤
                 ▼
        ┌──────────────────────┐  ╭300
        │  BINARY ENCODING OF   │
        │     IMAGE SIGNAL      │
        └──────────────────────┘
          │                 │
          ▼                 ▼
┌──────────────────────┐╭310  ┌──────────────────────┐ ╭320
│STORE BINARY-CODED IMAGE│    │ DETECT COORDINATES OF │
│INTO MEMORY             │    │ POSITIONING SYMBOL    │
└──────────────────────┘      └──────────────────────┘
                 │
                 ▼
              ╱───────────╲  ╭330
             ╱    MORE      ╲        NO
            ╱ THAN THREE POSITIONING╲────────────►
            ╲    SYMBOLS ?          ╱
             ╲────────────────────╱
                 │ YES
                 ▼
        ┌──────────────────────┐ ╭340
        │SELECT THREE POSITIONING│
        │SYMBOLS                 │
        └──────────────────────┘
                 │
                 ▼
        ┌──────────────────────┐ ╭350
        │ CALCULATE COORDINATES │
        │ OF APEX HAVING NO     │
        │ POSITIONING SYMBOL    │
        └──────────────────────┘
                 │
                 ▼
  DETECTED    ╱───────────╲  ╭360  NOT
◄───────────╱    APEX       ╲     DETECTED
           ╱  DETECTING SELL  ╲──────────►
           ╲   DETECTED ?     ╱
            ╲────────────────╱
   │                              │
   ▼                              ▼
┌──────────────────────┐ ╭380   ╱───────────╲  ╭370
│OBTAIN COORDINATES OF  │       ╱  IS THERE    ╲      YES
│CENTER OF EACH TIMING  │      ╱ANOTHER COMBINATION╲──────►
│CELL                   │      ╲OF POSITIONING    ╱
└──────────────────────┘       ╲ SYNBOLS ?      ╱
   │                            ╲──────────────╱
   ▼                                  │ NO
┌──────────────────────┐ ╭390
│OBTAIN COORDINATES OF  │
│CENTER OF EACH DATA CELL│
└──────────────────────┘
   │
   ▼
  (1)
```

# FIG. 16

①

```
            400
JUDGE WHITE-AND-BLACK PATTERN
OF DATA CELLS

            410
READ INFORMATION OF CELL-
FEATURE-CONVERSION MATRIX
PATTERN

            420
TAKE EXCLUSIVE-OR WITH CELL-
FEATURE-CONVERSION MATRIX
PATTERN

            430
DIVIDE DATA REGION INTO
CHARACTER CELL GROUPS

            440
CONVERT EACH CHARACTER CELL
GROUP INTO DATA(CHARACTER)
```

NO
ERROR

450
ERROR DETECTED
BY ERROR-CORRECTING
CODE ?

ERROR FOUND        460
CORRECT DATA ERROR

470        ERROR
ERROR DETECTED        FOUND
BY ERROR DETECTING CODE
(CRC CODE) ?

NO ERROR

( END OF READING OPERATION )        ②

## FIG. 17

## FIG. 18
## RELATED ART

## FIG. 19
## RELATED ART